# EUROPEAN PATENT SPECIFICATION

(11) **EP 3 410 773 B1**
(45) Date of publication and mention of the grant of the patent: **25.01.2023**
(21) Application number: 16887752.0
(22) Date of filing: 14.12.2016
(51) Int. Cl.: H04W 28/14, H04W 28/02

(54) **METHOD, DEVICE AND SYSTEM FOR REALIZING MOBILE EDGE COMPUTING SERVICE**
VERFAHREN, VORRICHTUNG UND SYSTEM ZUR DURCHFÜHRUNG EINES MOBILEN EDGE-COMPUTING-DIENSTES
PROCÉDÉ, DISPOSITIF ET SYSTÈME DE MISE EN OEUVRE DE SERVICE DE TRAITEMENT EN PÉRIPHÉRIE DE RÉSEAU

(30) Priority: 28.01.2016 CN 201610061663
(43) Date of publication of application: 05.12.2018
(73) Proprietor: ZTE Corporation, Shenzhen, Guangdong 518057 (CN)
(72) Inventor: GAO, Yin, Shenzhen Guangdong 518057 (CN)
(74) Representative: Canzler & Bergmeier Patentanwälte Partnerschaft mbB
(86) International application number: PCT/CN2016/109884
(87) International publication number: WO 2017/128881

(56) References cited:
- CN-A- 102 110 021
- CN-A- 102 186 181
- CN-A- 105 246 101
- US-A1- 2014 067 758
- HUAWEI: MILAN PATEL ET AL: "Mobile-Edge Computing - Introductory Technical White P", 3GPP DRAFT; MOBILE-EDGE_COMPUTING_-_INTRODUCTORY_TECHN ICAL_WHITE_PAPER_V1 18-09-14, 3RD GENERATION PARTNERSHIP PROJECT (3GPP), MOBILE COMPETENCE CENTRE ; 650, ROUTE DES LUCIOLES ; F-06921 SOPHIA-ANTIP , 7 December 2014 (2014-12-07), XP050901711, Retrieved from the Internet: URL:http://www.3gpp.org/ftp/Meetings_3GPP_ SYNC/SA/SA/Docs/ [retrieved on 2014-12-07]
- INTEL: "Discussion Paper on ETSI Mobile-Edge Computing (MEC) and its Relevance to 3GPP Multimedia Services", 3GPP DRAFT; S4-150757_ETSI_MEC_USE_CASES, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG4, no. Rennes, France; 20150706 - 20150710 30 June 2015 (2015-06-30), XP050987072, Retrieved from the Internet: URL:http://www.3gpp.org/ftp/tsg_sa/WG4_COD EC/TSGS4_84/Docs/ [retrieved on 2015-06-30]
- VODAFONE: "Impact on Lawful Interception of Mobile Edge Computing", 3GPP DRAFT; LI IMPACT OF MEC, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG3 28 October 2014 (2014-10-28), XP050895700, Retrieved from the Internet: URL:http://www.3gpp.org/ftp/tsg_sa/WG3_Sec urity/TSGS3_LI/2014_55_Portland/

## Description

### TECHNICAL FIELD

The present disclosure relates, but is not limited, to mobile communications, and in particular to a method, device, and system for implementing a Mobile-Edge Computing (MEC) service.

### BACKGROUND

A Mobile-Edge Computing (MEC) service may provide an edge mobile network in an Internet Technology (IT) service environment and cloud computing capability of a content provider and an application developer. Such an environment is featured by an ultralow delay, a large bandwidth, real-time access to (and use of) information in a radio network, etc. An operator may open an edge of a Radio Access Network (RAN) to an authorized third party, to allow the authorized third party to flexibly and swiftly deploy innovative application and service oriented toward a mobile user, an enterprise, a vertical market, etc.

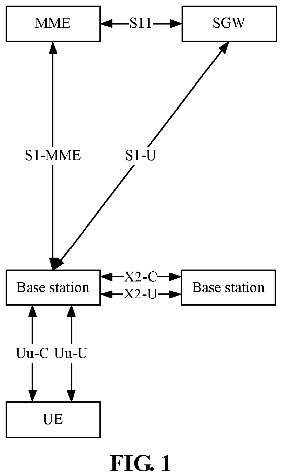

FIG. 1 is a schematic diagram of overall architecture of a Long Term Evolution (LTE) system in related art. As shown in FIG. 1, an LTE architecture may include a Mobility Management Entity (MME), a Serving Gateway (SGW), User Equipment (UE, also referred to as a terminal), an evolved Node B (eNB), etc. An interface Uu may be between UE and an eNB. An S1-MME interface (S1 interface for a Control plane) may be between an eNB and an MME. An S1-U interface may be between an eNB and an SGW. Interfaces X2-User plane (X2-U) and X2-Control plane (X2-C) may be between eNBs.

A protocol stack of an S1-MME interface in LTE may include, from the bottom up, layers of an L1 protocol, an L2 protocol, an Internet Protocol (IP), a Stream Control Transmission Protocol (SCTP), and an S1-Application Protocol (S1-AP). A protocol stack of an S1-U interface in LTE may include, from the bottom up, layers of an L1 protocol, an L2 protocol, a User Datagram Protocol (UDP)/ IP, a GPRS Tunneling Protocol- User plane (GTP -U).

With development of communications, with arrival of an era of an Internet Of Things, tens of billions of objects may all have to access a network in the future. Different terminals may access a mobile network with different service demands. MEC may be natural development of evolution of a mobile base station that integrates IT and a telecommunication network. A case of using MEC may include, but is not limited to, scenarios of video analysis, a location service, an Internet Of Things (IOT), optimized local content distribution, data cache, etc. A condition of a local access network may allow application software to develop local content and real-time information. A congestion may be eased and a local service may be further served effectively by deploying various services and cached contents in a mobile network.

Therefore, an MEC server system may have to be implemented in an existing 3rd Generation Partnership Project (3GPP) mobile communication network.

In HUAWEI: MILAN PATEL ET AL "Mobile-Edge Computing Introductory Technical White P", 3GPP DRAFT: MOBILE-EDGE_COMPUTING_INTRODUCTORY_TECHNICAL_WHITE_PAPE R_V1 18-09-14, 3RD GENERATION PARTNERSHIP PROJECT (3GPP), MOBILE COMPTENCE GENTRE: 650, ROUTE DES LUCIPLES, the concept of Mobile-edge Computing and the related key market driver is introduced, which is related to only the concept of MEC, rather than an implementation of the MEC in the mobile communication network.

In addition, in INTEL: "Discussion Paper on ETSI Mobile-Edge Computing (MEC) and its relevance to 3GPP Multimedia Services", 3GPP DRAFT, S4-150757_ETSI_MEC_USE_CASES, 3RD GENERATION PARTNERSHIP PROJECT (3GPP), MOBILE COMPETENCE CENTRE, a new Industry Specification Group was established by ETSI on Mobile-Edge Computing to create a standardized, open environment to allow the efficient and seamless integration of such edge applications across multi-vendor Mobile-edge computing platforms.

### SUMMARY

The invention is defined by the subject matter of the independent claims. Advantageous enhancements are subject to the dependent claims.

### BRIEF DESCRIPTION OF THE DRAWINGS

FIG. 1 is a schematic diagram of overall LTE architecture in related art.
FIG. 2 is a schematic diagram of a system for implementing an MEC service according to an embodiment herein.
FIG. 3 is a schematic diagram of a device for implementing an MEC service according to an embodiment herein.
FIG. 4 is a schematic diagram of a system for implementing an MEC service according to a first embodiment herein.
FIG. 5 is a schematic diagram of a system for implementing an MEC service according to a second embodiment herein.
FIG. 6 is a schematic diagram of a system for implementing an MEC service according to a third embodiment herein.

### DETAILED DESCRIPTION

Embodiments herein are described below with reference to the drawings. Note that any embodiment described herein is intended only to describe and explain the present disclosure instead of limiting the present disclosure.

According to an embodiment herein, a method for implementing a Mobile-Edge Computing (MEC) service includes that an MEC function of at least one of a Radio Access Network (RAN) node, an RAN aggregating node or a core network node is performed by the at least one of the RAN node, the RAN aggregating node or the core network node.

An MEC function may be performed only by an RAN node. Alternatively, an MEC function may be performed only by an RAN aggregating node. Alternatively, an MEC function may be performed only by a core network node. Alternatively, identical or different MEC functions may be performed by any two of the three nodes. Alternatively, identical or different MEC functions may be performed by the three nodes, respectively.

In an exemplary embodiment, the MEC function of the at least one of the RAN node, the RAN aggregating node or the core network node may be performed by the at least one of the RAN node, the RAN aggregating node or the core network node as follows.

At least one of information collection, local service caching or local service shunting may be performed by at least one of the RAN node, the RAN aggregating node or the core network node.

The information collection may be performed by the RAN node in at least one mode as follows.

Information on UE may be acquired by a report from the UE via an air interface.

Information on a cell may be acquired via a base station.

Information on a bearer related to UE may be acquired via an S1 interface.

The information collection may be performed by the RAN aggregating node in at least one mode as follows.

Information on UE may be acquired from a base station via an S1 interface. The base station may acquire the information on the UE by a report from the UE via an air interface.

At least one of information on a cell or information on a base station managed by the RAN aggregating node may be acquired via an S1 interface.

Information on a bearer related to UE may be acquired via an S1 interface.

The information collection may be performed by the core network node in at least one mode as follows.

Information on subscription related to UE may be acquired from a Home Location Register (HLR) or a Home Subscriber Server (HSS).

At least one of information on a base station or information on a cell may be acquired via an S1 interface.

The local service shunting may be performed by at least one of the RAN node, the RAN aggregating node or the core network node as follows.

Information on a local MEC function entity or information on a local MEC function entity supported by at least one of the RAN node or the RAN aggregating node may be reported to a core by the at least one of the RAN node or the RAN aggregating node via an S1 interface message, for establishing a bearer for MEC shunting.

The RAN node may perform the local service shunting as follows. Information on a local MEC function entity may be reported to a core by the RAN node via an S1 interface message. The RAN aggregating node may perform the local service shunting as follows. Information on a local MEC function entity may be reported to a core by the RAN aggregating node via an S1 interface message. The core network node may perform the local service shunting as follows. Information on a local MEC function entity supported by the RAN node may be reported to a core by the RAN node via an S1 interface message.

The RAN node may be a base station or a home base station. The RAN aggregating node may be a home base station gateway (GW). The core network node may be a Serving Gateway (SGW). However, embodiments herein are not limited as such.

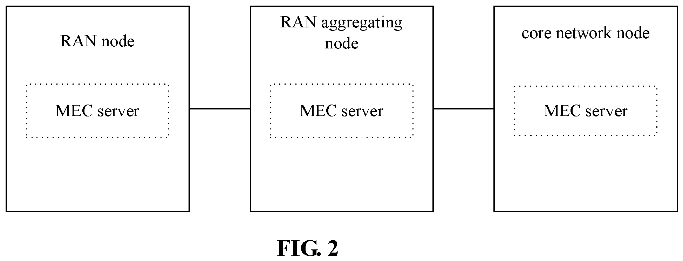

FIG. 2 is a schematic diagram of a system for implementing an MEC service according to an embodiment herein. As shown in FIG. 2, the system for implementing an MEC service according to the embodiment herein includes an RAN node, an RAN aggregating node, a core network node, and an MEC server. An MEC function entity of the MEC server is deployed on at least one of the RAN node, the RAN aggregating node or the core network node.

The MEC server may be deployed on the RAN node, the RAN aggregating node or the core network node. In this case, any MEC function entity of the MEC server is deployed on that node. That is, any function of the MEC server is performed on or by that node. The MEC server may be deployed on at least two of the RAN node, the RAN aggregating node, or the core network node. In this case, all MEC function entities of the MEC server may be deployed separately on two or three nodes. That is, part of the function of the MEC server is performed on or by a corresponding node. Multiple MEC servers may be deployed on one node or on different nodes.

When the MEC function entity is deployed on the RAN node, data transmission between the MEC function entity and the RAN node may be implemented by an internal interface. When the MEC function entity is deployed on the RAN aggregating node, data transmission between the MEC function entity and the RAN node may be implemented by an S1 interface. When the MEC function entity is deployed on the core network node, data transmission between the MEC function entity and the RAN node may be implemented by an S1-U interface.

In response to the MEC function entity being deployed on the RAN node, the MEC function entity may be configured for collecting information by at least one of:
acquiring information on UE by a report from the UE via an air interface;
acquiring information on a cell via a base station; or
acquiring information on a bearer related to UE via an S1 interface.

In response to the MEC function entity being deployed on the RAN aggregating node, the MEC function entity may be configured for collecting information by at least one of:
acquiring, from a base station via an S1 interface, information on UE, herein the base station acquires information on UE by a report from the UE via an air interface;
acquiring, via an S1 interface, at least one of information on a cell or information on a base station managed by the RAN aggregating node; or
acquiring information on a bearer related to UE via an S1 interface.

In response to the MEC function entity being deployed on the core network node, the MEC function entity may be configured for collecting information by at least one of:
acquiring, from an HLR or an HSS, information on subscription related to UE; or
acquiring, via an S1 interface, at least one of information on a base station or information on a cell.

At least one of the RAN node or the RAN aggregating node may be configured for: reporting, to a core via an S1 interface message, information on a local MEC function entity or information on a local MEC function entity supported by the at least one of the RAN node or the RAN aggregating node, for establishing a bearer for MEC shunting.

When an MEC function entity for the bearer for the local service shunting is deployed on the RAN node, information on a local MEC function entity may be reported to a core by the RAN node via an S1 interface message. When an MEC function entity for the bearer for the local service shunting is deployed on the RAN aggregating node, information on a local MEC function entity may be reported to a core by the RAN aggregating node via an S1 interface message. When an MEC function entity for the bearer for the local service shunting is deployed on the core network node, information on a local MEC function entity supported by the RAN node may be reported to a core by the RAN node via an S1 interface message.

The RAN node may be a base station or an HeNB. The RAN aggregating node may be an HeNB gateway (GW). The core network node may be a Serving Gateway (SGW). However, embodiments herein are not limited as such.

According to an embodiment herein, a method for implementing an MEC service includes an operation as follows.

A communicating node may perform at least one of collecting information on an MEC service or processing the MEC service.

The communicating node may be an RAN node, an RAN aggregating node or a core network node.

The communicating node may collect the information on the MEC service. Alternatively, the communicating node may collect the information on the MEC service, and process the MEC service according to the information on the MEC service collected. Alternatively, the communicating node may process the MEC service. Embodiments herein are not limited to processing the MEC service according to the information on the MEC service collected..

When the communicating node is an RAN node, the information on the MEC service may be collected by the communicating node in at least one mode as follows.

Information on UE may be acquired by a report from the UE via an air interface.

Information on a cell may be acquired via a base station.

Information on a bearer related to UE may be acquired via an S1 interface.

When the communicating node is an RAN aggregating node, the information on the MEC service may be collected by the communicating node in at least one mode as follows.

Information on UE may be acquired from a base station via an S1 interface. The base station may acquire the information on the UE by a report from the UE via an air interface.

At least one of information on a cell or information on a base station managed by the RAN aggregating node may be acquired via an S1 interface.

Information on a bearer related to UE may be acquired via an S1 interface.

When the communicating node is a core network node, the information on the MEC service may be collected by the communicating node in at least one mode as follows.

Information on subscription related to UE may be acquired from an HLR or an HSS.

At least one of information on a base station or information on a cell may be acquired via an S1 interface.

The MEC service may be processed by the communicating node as follows. At least one of caching a local service or shunting the local service may be performed by the RAN node.

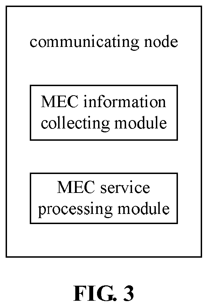

FIG. 3 is a schematic diagram of a device for implementing an MEC service according to an embodiment herein. According to an embodiment herein, the device for implementing an MEC service applies to a communicating node. The device includes an MEC information collecting module and an MEC service processing module. The MEC information collecting module is configured for: collecting information on an MEC service. The MEC service processing module is configured for: processing the MEC service according to the information on the MEC service.

The communicating node may be an RAN node, an RAN aggregating node or a core network node.

The present disclosure may be elaborated below via other embodiments. Description is made for a case where any function entity of the MEC server is deployed on one node. System architecture according to the embodiments below may be architecture of a LTE communicating system.

### First Embodiment

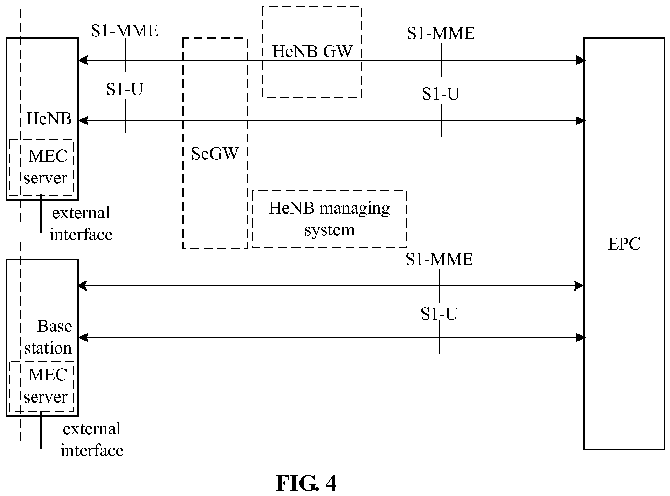

As shown in FIG. 4, an MEC server may be deployed on an RAN node. The RAN node may be a base station (eNB) or a home base station (HeNB). Data may be transmitted between an MEC server and a base station via an internal interface. Conventional mobile data of S1-U from an Evolved Packet Core (EPC) may be cached and processed locally. Alternatively, external data may be received directly via an external interface. A network of external data may refer to an IP network being connected to, but not part of, a Public Land Mobile Network (PLMN), such as an Internet or data in a third-party database.

An MEC server may collect information as follows. Information collected as such may include, but is not limited to, content as follows.

Information on UE, such as capability of the UE, a type of the UE, information on a trajectory of the UE, etc., may be acquired by a report from the UE via an air interface.

Information on a local serving cell or a neighboring cell, such as capability of a cell, information on a load of a cell, information on a bandwidth of a cell, etc., may be acquired via a base station.

Information on a bearer related to UE, such as information on Quality of Service (QoS) of the bearer, etc., may be acquired via an S1 interface,.

For a service shunted by an MEC server, a base station hosting the MEC server may have to report, to a core via an S1 interface message, information on the local MEC server. For example, an IP address of the MEC server may be reported to the core via a UE dedicated message or an S1 interface public message, for establishing a bearer for shunting by the MEC server. A Packet Data Network Gateway (PGW) for an MEC service may select to use an MEC IP address provided by a base station or an HeNB, instead of searching a Domain Name System (DNS). Meanwhile, a bearer establishment message for an S1 interface may have to contain an association Identification (ID) of a bearer for shunting by the MEC server, for associating user plane data transmission between a base station and the MEC server.

For a service cached by an MEC server, a user plane may remain S1-U. The MEC server may reallocate QoS, a priority, etc., of the service locally according to information collected. The MEC server may inform, via a local interface, a base station of a strategy for scheduling optimization.

### Second Embodiment

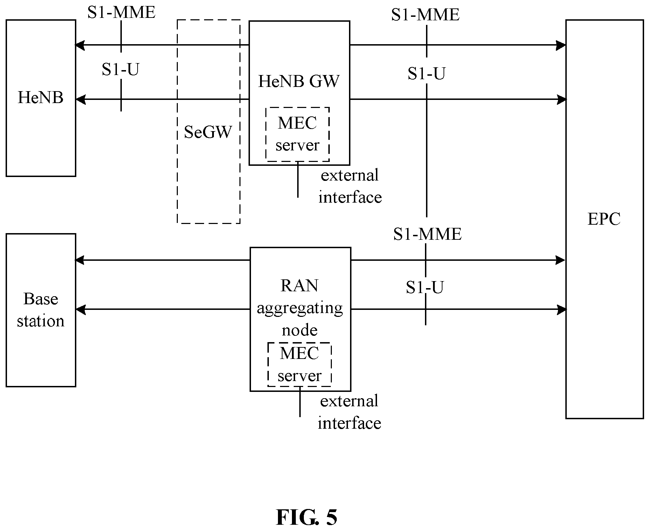

As shown in FIG. 5, an MEC server may be deployed on an RAN aggregating node, such as an HeNB gateway (HeNB GW) or an RAN aggregating node in another form. Data may be transmitted between an MEC server and a base station or an HeNB via an S1 interface. Alternatively, conventional mobile data of S1-U from an Evolved Packet Core (EPC) may be cached and processed locally. Alternatively, external data may be accepted directly via an external interface. A network of external data may refer to an IP network being connected to, yet not part of, a Public Land Mobile Network (PLMN), such as an Internet or data in a third-party database.

An MEC server may collect information as follows. Information collected as such may include, but is not limited to, content as follows.

A base station may acquire information on UE by a report from the UE via an air interface, and report the information on the UE to an MEC server via an S1 interface. The information on the UE may include capability of the UE, a type of the UE, information on a trajectory of the UE, etc.

Information on one or more base stations managed by an aggregating node, such as capability of a base station, capability of a cell managed by a base station, information on a load of a cell, information on a bandwidth of a cell, etc., may be acquired via an S1 interface.

Information on a bearer related to UE, such as information on QoS of the bearer, etc., may be acquired via an S1 interface.

For a service shunted by an MEC server, an RAN aggregating node hosting the MEC server may have to report, to a core via an S1 interface message, information on the local MEC server. For example, information on an ID or an IP address of the MEC server may be reported to the core via a UE dedicated message or an S1 interface public message, for establishing a bearer for shunting by the MEC server. Meanwhile, a bearer establishment message for an S1 interface may contain a transmitting address and a Tunnel Endpoint Identifier (TEID) of a GPRS Tunneling Protocol (GTP) with the MEC server as a Serving Gateway, for associating user plane data transmission for sending, by a base station, data uplink to the MEC server.

For a service cached by an MEC server, a user plane may remain S1-U. The MEC server may reallocate QoS, a priority, etc., of the service locally according to information collected. The MEC server may inform, via an S1 interface, a base station of a strategy for scheduling optimization.

### Third Embodiment

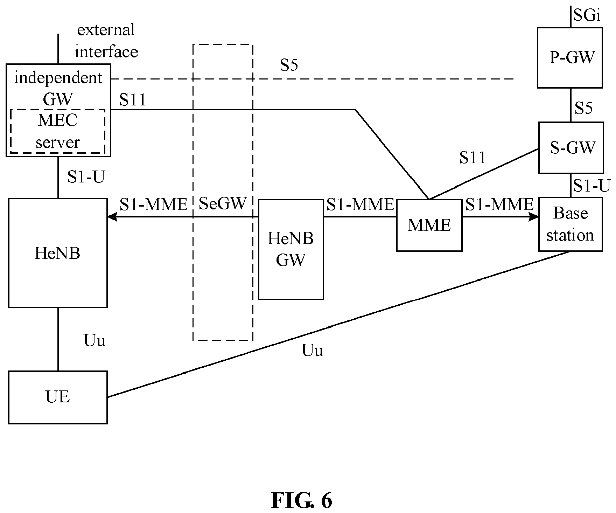

As shown in FIG. 6, an MEC server may be deployed on a core network node, such as a Serving Gateway (SGW). Data may be transmitted between an MEC server and a base station via an S1-U interface. Alternatively, conventional PGW mobile data from a core may be cached and processed locally. Alternatively, external data may be accepted directly via an external interface. A network of external data may refer to an IP network being connected to, yet not part of, a Public Land Mobile Network (PLMN), such as an Internet or data in a third-party database.

An MEC server may collect information as follows. Information collected as such may include, but is not limited to, content as follows.

Information on subscription related to UE, such as capability of the UE, a type of the UE, etc., may be acquired from an HLR or an HSS.

Information on one or more base stations, such as capability of a base station, capability of a cell managed by a base station, information on a load of a cell, information on a bandwidth of a cell, etc., may be acquired via an S1 interface.

For a service shunted by an MEC server, a base station may have to report, to a core via an S1 interface message, information on the local MEC server supported by the base station. For example, information on an ID of the MEC server or information on an ID of a group of MEC servers may be reported to the core via a UE dedicated message or an S1 interface public message, for establishing a bearer for shunting by the MEC server. Meanwhile, a bearer establishment message for an S1 interface may contain a transmitting address and a TEID of a GTP with the MEC server as a Serving Gateway, for associating user plane data transmission for sending, by a base station, data uplink to the MEC server. The message may further contain information for indicating a bearer for shunting by the MEC server, thereby facilitating identifying a service by a base station as well as using an optimized scheduling algorithm.

For a service cached by an MEC server, a user plane may remain S1-U. The MEC server may reallocate QoS, a priority, etc., of the service locally according to information collected. The MEC server may inform, via an S1 interface, a base station of a strategy for scheduling optimization.

A method for implementing an MEC service according to an embodiment herein may also apply to a 3rd mobile communications (3G) system. An RAN node may be a base station. An RAN aggregating node may be a Radio Network Controller (RNC).

According to an embodiment herein, a computer-readable storage medium has stored therein computer-executable instructions, which when executed, implement a method for implementing an MEC service herein.

Those skilled in the art may appreciate that all or some operations in a method, a functional module /unit in a system and device disclosed herein may be implemented as software, firmware, hardware, a proper combination thereof, etc. In hardware implementation, division of the functional module /unit may not necessarily correspond to that of physical units. For example, a physical component may serve for multiple functions. Alternatively, a function or operation may be executed by a number of cooperating physical components. Some or all components may be implemented as software executed by a processor such as a Digital Signal Processor (DSP) or a microprocessor, or as hardware or an Integrated Circuit such as a dedicated Integrated Circuit. Such software may be distributed on computer-readable medium. The computer-readable medium may include computer storage medium (or non-transitory medium) and communicating medium (or transitory medium). As known by those skilled in the art, a term "computer storage medium" may include removable, irremovable, volatile, or non- volatile medium implemented in any method or technology for storing information (such as computer-readable instructions, a data structure, a program module or other data). The computer storage medium may include, but is not limited to, Random Access Memory (RAM), Read-Only Memory (ROM), Electrically Erasable Programmable read only memory (EEPROM), flash memory, another memory technology, a CD-ROM, a Digital Versatile Disc (DVD), another CD storage, a magnetic cassette, a magnetic tape, a magnetic disk storage, another magnetic storage device, any other medium capable of storing expected information and accessible by a computer, etc. As known by those skilled in the art, communicating medium may usually contain computer-readable instructions, a data structure, a program module, other data in a modulated data signal such as a carrier or another transmitting mechanism, etc. Communicating medium may include any medium delivering information.

A basic principle, a main characteristic, as well as a beneficial effect herein is illustrated and described. What described in the specification and an embodiment herein describes but the principle of the present disclosure. Various changes and improvements may further be made to the present disclosure without departing from the scope of the present disclosure. Such changes and improvements all fall within the scope of the present disclosure.

### Industrial applicability

With a method, device, and system for implementing an MEC service according to an embodiment herein, a method, device, and system for implementing a Mobile-Edge Computing service, an MEC service may be implemented in a 3GPP mobile communication network, not only combining a mobile network with big data, but also improving efficiency of a network as well as user satisfaction.

## Claims

1. A method for implementing a Mobile-Edge Computing, MEC, service, **characterized in that**, the method comprises:
performing, by a core network node, an MEC function;
wherein the core network node performing the MEC function comprises:
performing, by the core network node, information collection, wherein the core network node performing the information collection comprises at least one of: acquiring, from a Home Location Register, HLR, or a Home Subscriber Server, HSS, information on subscription related to a first User Equipment, UE, and the information on subscription related to the first UE comprising a capability of the first UE and/or a type of the first UE; or acquiring, via an interface between the core network node and a first Radio Access Network, RAN, node, at least one of information on a first base station or information on a first cell, the information on the first base station comprising a capability of the first base station, and the information on the first cell comprising a capability of the first cell managed by a second base station, information on a load of the first cell, and/ or information on a bandwidth of the first cell; and
performing, by the core network node, local service caching which comprises reallocating Quality of Service, QoS, and/or a priority of a service cached by an MEC server deployed on the core network node according to information collected.

2. The method of claim 1, wherein the method comprises:
performing, by at least one of a third RAN node or a second RAN aggregating node, the MEC function;
wherein the at least one of the third RAN node or the second RAN aggregating node performing the MEC function comprises: performing, by the at least one of the third RAN node or the second RAN aggregating node, at least one of the information collection, the local service caching or local service shunting.

3. The method of claim 2, wherein the third RAN node performing the information collection comprises at least one of:
acquiring information on a second UE, by a report from the second UE via an air interface;
acquiring information on a second cell via a third base station; or
acquiring information on a bearer related to a third UE via an S1 interface.

4. The method of claim 2, wherein the second RAN aggregating node performing the information collection comprises at least one of:
acquiring, from a fourth base station, via an S1 interface, information on a fourth UE, wherein the fourth base station acquires information on the fourth UE by a report from the fourth UE via an air interface;
acquiring, via an S1 interface, at least one of information on a third cell or information on a fifth base station managed by the second RAN aggregating node; or
acquiring information on a bearer related to a fifth UE via an S1 interface.

5. A system for implementing a Mobile-Edge Computing, MEC, service, **characterized in that**, the system comprises a core network node and an MEC server;
wherein an MEC function entity of the MEC server is deployed on the core network node;
the MEC function entity is configured for performing information collection, wherein the MEC function entity is configured to perform at least one of the following operations to perform the information collection: acquiring, from a Home Location Register, HLR, or a Home Subscriber Server, HSS, information on subscription related to a first User Equipment, UE, and the information on subscription related to the first UE comprising a capability of the first UE and/or a type of the first UE; or acquiring, via an interface between the core network node and a first Radio Access Network, RAN, node, at least one of information on a first base station or information on a first cell, the information on the first base station comprising a capability of the first base station, and the information on the first cell comprising a capability of the first cell managed by a second base station, information on a load of the first cell, and/ or information on a bandwidth of the first cell; and
the MEC function entity is configured for performing local service caching which comprises reallocating Quality of Service, QoS, and/or a priority of a service cached by the MEC server deployed on the core network node according to information collected.

6. The system of claim 5, wherein the system comprises a third RAN node, and a second RAN aggregating node; and
the MEC function entity of the MEC server is deployed on at least one of the third RAN node or the second RAN aggregating node.

7. The system of claim 6, wherein
in response to the MEC function entity being deployed on the third RAN node, data transmission between the MEC function entity and the third RAN node is implemented by an internal interface;
in response to the MEC function entity being deployed on the second RAN aggregating node, data transmission between the MEC function entity and the second RAN node is implemented by an S1 interface; and
in response to the MEC function entity being deployed on the core network node, data transmission between the MEC function entity and the RAN node is implemented by via an S1-U interface.

8. The system of claim 6, wherein in response to the MEC function entity being deployed on the third RAN node, the MEC function entity is configured for collecting information by at least one of:
acquiring information on a second UE, by a report from the second UE via an air interface;
acquiring information on a second cell via a third base station; or
acquiring information on a bearer related to a third UE via an S1 interface.

9. The system of claim 6, wherein in response to the MEC function entity being deployed on the second RAN aggregating node, the MEC function entity is configured for collecting information by at least one of:
acquiring, from a fourth base station, via an S1 interface, information on a fourth UE, wherein the fourth base station acquires information on the fourth UE by a report from the fourth UE via an air interface;
acquiring, via an S1 interface, at least one of information on a third cell or information on a fifth base station managed by the second RAN aggregating node; or
acquiring information on a bearer related to a fifth UE via an S1 interface.

10. The system of claim 6, wherein the third RAN node, the second RAN aggregating node, or the core network node comprises an MEC information collecting module and an MEC service processing module,
wherein the MEC information collecting module is configured for:
collecting information on an MEC service; and
wherein the MEC service processing module is configured for: processing the MEC service according to the information on the MEC service.

11. A computer-readable storage medium having stored therein computer-executable instructions, **characterized in that**, the instructions, when executed by a processor, cause the processor to perform the method for implementing a Mobile-Edge Computing, MEC, service according to any one of claims 1 to 4.

## Patentansprüche

1. Verfahren zur Implementierung eines Mobile-Edge-Computing-, MEC-, Dienstes, **dadurch gekennzeichnet, dass** das Verfahren umfasst:
Durchführen einer MEC-Funktion durch einen Kernnetzknoten;
wobei der Kernnetzknoten, der die MEC-Funktion durchführt, umfasst:
Durchführen einer Informationssammlung durch den Kernnetzknoten, wobei der Kernnetzknoten, der die Informationssammlung durchführt, mindestens eines von Folgendem umfasst:
Erfassen von Informationen über ein Abonnement, das sich auf ein erstes Benutzergerät, UE, bezieht, von einem Home Location Register, HLR, oder einem Home Subscriber Server, HSS, wobei die Informationen über das Abonnement, die sich auf das erste UE beziehen, eine Fähigkeit des ersten UE und/oder einen Typ des ersten UE umfassen oder Erfassen von Informationen über eine erste Basisstation oder Informationen über eine erste Zelle über eine Schnittstelle zwischen dem Kernnetzknoten und einem ersten Funkzugangsnetzknoten (RAN-Knoten), wobei die Informationen über die erste Basisstation eine Fähigkeit der ersten Basisstation umfassen und die Informationen über die erste Zelle eine Fähigkeit der ersten Zelle umfassen, die von einer zweiten Basisstation verwaltet wird, von Informationen über eine Last der ersten Zelle und/oder von Informationen über eine Bandbreite der ersten Zelle; und
Durchführen von lokalem Dienst-Caching durch den Kernnetzknoten, was das Neuzuweisen von Dienstgüte, QoS, und/oder einer Priorität eines Dienstes umfasst, der von einem MEC-Server, der auf dem Kernnetzknoten eingesetzt ist, gemäß den gesammelten Informationen zwischengespeichert wird.

2. Verfahren nach Anspruch 1, wobei das Verfahren umfasst:
Durchführen der MEC-Funktion durch mindestens einen von einem dritten RAN-Knoten oder einem zweiten RAN-Aggregationsknoten;
wobei der mindestens eine von dem dritten RAN-Knoten oder dem zweiten RAN-Aggregationsknoten, der die MEC-Funktion durchführt, umfasst: Durchführen der Informationssammlung, des lokalen Dienst-Cachings oder des lokalen Dienst-Shuntings durch den mindestens einen von dem dritten RAN-Knoten oder dem zweiten RAN-Aggregationsknoten.

3. Verfahren nach Anspruch 2, wobei der dritte RAN-Knoten, der die Informationssammlung durchführt, mindestens eines der folgenden Elemente umfasst:
Erfassen von Informationen über ein zweites UE, durch einen Bericht von dem zweiten UE über eine Luftschnittstelle;
Erfassen von Informationen über eine zweite Zelle über eine dritte Basisstation; oder
das Erfassen von Informationen über einen Träger, der mit einem dritten UE verbunden ist, über eine S1-Schnittstelle.

4. Verfahren nach Anspruch 2, wobei der zweite RAN-Aggregationsknoten, der die Informationssammlung durchführt, mindestens einen der folgenden Schritte umfasst:
Erfassen von Informationen über ein viertes UE von einer vierten Basisstation über eine S1-Schnittstelle, wobei die vierte Basisstation die Informationen über das vierte UE durch einen Bericht von dem vierten UE über eine Luftschnittstelle erfasst;
Erfassen von Informationen über eine dritte Zelle oder von Informationen über eine fünfte Basisstation, die von dem zweiten RAN-Aggregationsknoten verwaltet wird, über eine S1-Schnittstelle; oder
Erfassen von Informationen über einen mit einem fünften UE verbundenen Träger über eine S1-Schnittstelle.

5. System zur Implementierung eines Mobile-Edge-Computing-, MEC-, Dienstes, **dadurch gekennzeichnet, dass** das System einen Kernnetzknoten und einen MEC-Server umfasst;
wobei eine MEC-Funktionseinheit des MEC-Servers auf dem Kernnetzknoten eingesetzt wird;
die MEC-Funktionseinheit zum Durchführen einer Informationssammlung konfiguriert ist, wobei die MEC-Funktionseinheit konfiguriert ist, um mindestens eine der folgenden Operationen durchzuführen, um die Informationssammlung durchzuführen: Erfassen von Informationen über ein Abonnement, das sich auf ein erstes Benutzergerät, UE, bezieht, von einem Home Location Register, HLR, oder einem Home Subscriber Server, HSS, wobei die Informationen über das Abonnement, die sich auf das erste UE beziehen, eine Fähigkeit des ersten UE und/oder einen Typ des ersten UE umfassen oder Erfassen, über eine Schnittstelle zwischen dem Kernnetzknoten und einem ersten Funkzugangsnetzknoten (RAN-Knoten), von Informationen über eine erste Basisstation oder Informationen über eine erste Zelle, wobei die Informationen über die erste Basisstation eine Fähigkeit der ersten Basisstation umfassen, und die Informationen über die erste Zelle eine Fähigkeit der ersten Zelle umfassen, die von einer zweiten Basisstation verwaltet wird, von Informationen über eine Last der ersten Zelle und/oder von Informationen über eine Bandbreite der ersten Zelle; und
die MEC-Funktionseinheit zum Durchführen von lokalem Dienst-Caching konfiguriert ist, das das Neuzuweisen von Dienstgüte, QoS, und/oder einer Priorität eines Dienstes umfasst, der von dem MEC-Server, der auf dem Kernnetzknoten eingesetzt ist, gemäß den gesammelten Informationen zwischengespeichert wird.

6. System nach Anspruch 5, wobei das System einen dritten RAN-Knoten und einen zweiten RAN-Aggregationsknoten umfasst; und
die MEC-Funktionseinheit des MEC-Servers auf mindestens einem von dem dritten RAN-Knoten oder dem zweiten RAN-Aggregationsknoten eingesetzt ist.

7. System nach Anspruch 6, wobei
als Reaktion darauf, dass die MEC-Funktionseinheit auf dem dritten RAN-Knoten eingesetzt wird, die Datenübertragung zwischen der MEC-Funktionseinheit und dem dritten RAN-Knoten durch eine interne Schnittstelle implementiert wird;
als Reaktion darauf, dass die MEC-Funktionseinheit auf dem zweiten RAN-Aggregationsknoten eingesetzt wird, die Datenübertragung zwischen der MEC-Funktionseinheit und dem zweiten RAN-Knoten durch eine S1-Schnittstelle implementiert wird; und
als Reaktion darauf, dass die MEC-Funktionseinheit auf dem Kernnetzknoten eingesetzt wird, wird die Datenübertragung zwischen der MEC-Funktionseinheit und dem RAN-Knoten über eine S1-U-Schnittstelle implementiert.

8. System nach Anspruch 6, wobei die MEC-Funktionseinheit als Reaktion auf die Bereitstellung der MEC-Funktionseinheit auf dem dritten RAN-Knoten so konfiguriert ist, dass sie Informationen durch mindestens eine der folgenden Maßnahmen sammelt:
Erfassen von Informationen über ein zweites UE, durch einen Bericht von dem zweiten UE über eine Luftschnittstelle;
Erfassen von Informationen über eine zweite Zelle über eine dritte Basisstation; oder
Erfassen von Informationen über einen mit einem dritten UE verbundenen Träger über eine S1-Schnittstelle.

9. System nach Anspruch 6, wobei als Reaktion auf die Bereitstellung der MEC-Funktionseinheit auf dem zweiten RAN-Aggregationsknoten die MEC-Funktionseinheit zum Sammeln von Informationen durch mindestens einen der folgenden Schritte konfiguriert ist:
Erfassen von Informationen über ein viertes UE von einer vierten Basisstation über eine S1-Schnittstelle, wobei die vierte Basisstation Informationen über das vierte UE durch einen Bericht von dem vierten UE über eine Luftschnittstelle erfährt;
Erfassen von Informationen über eine dritte Zelle oder von Informationen über eine fünfte Basisstation, die von dem zweiten RAN-Aggregationsknoten verwaltet wird, über eine S1-Schnittstelle; oder
Erfassen von Informationen über einen mit einem fünften UE verbundenen Träger über eine S1-Schnittstelle.

10. System nach Anspruch 6, wobei der dritte RAN-Knoten, der zweite RAN-Aggregationsknoten oder der Kernnetzknoten ein MEC-Informationssammelmodul und ein MEC-Dienstverarbeitungsmodul umfasst,
wobei das MEC-Informationssammelmodul konfiguriert ist für:
das Sammeln von Informationen über einen MEC-Dienst; und
wobei das MEC-Dienstverarbeitungsmodul konfiguriert ist zum:
Verarbeiten des MEC-Dienstes gemäß den Informationen über den MEC-Dienst.

11. Computerlesbares Speichermedium, auf dem computerausführbare Befehle gespeichert sind, **dadurch gekennzeichnet, dass** die Befehle, wenn sie von einem Prozessor ausgeführt werden, den Prozessor veranlassen, das Verfahren zur Implementierung eines Mobile-Edge-Computing-Dienstes (MEC) nach einem der Ansprüche 1 bis 4 durchzuführen.

## Revendications

1. Procédé de mise en oeuvre d'un service d'informatique de pointe mobile, MEC, (Mobile-Edge Computing), **caractérisé en ce que**, le procédé comprend :
exécuter, par un noeud de réseau central, d'une fonction MEC ;
dans lequel le noeud de réseau central exécutant la fonction MEC comprend :
exécuter, par le noeud de réseau central, d'une collecte des informations, dans laquelle le noeud de réseau central exécutant la collecte des informations comprend au moins l'une des étapes suivantes :
acquérir, à partir d'un registre de localisation de domicile, HLR, (Home Location Register) ou d'un serveur d'abonnés de domicile, HSS, (Home Subscriber Server) des informations sur l'abonnement liées à un premier équipement utilisateur, UE, (User Equipment) et les informations sur l'abonnement liées au premier UE comprenant une capacité du premier UE et/ou un type du premier UE ; ou
acquérir, par l'intermédiaire d'une interface entre le noeud de réseau central et un premier noeud de réseau d'accès radio, RAN, (Radio Access Network) au moins l'une des informations sur une première station de base ou des informations sur une première cellule, les informations sur la première station de base comprenant une capacité de la première station de base, et les informations sur la première cellule comprenant une capacité de la première cellule administrée par une deuxième station de base, des informations sur une charge de la première cellule, et/ou des informations sur une largeur de bande de la première cellule ; et
exécuter, par le noeud de réseau central, d'une mise en cache de service local qui comprend la réaffectation de la qualité de service, QoS, (Quality of Service) et/ou d'une priorité d'un service mis en cache par un serveur MEC déployé sur le noeud de réseau central selon les informations collectées.

2. Procédé de la revendication 1, dans lequel le procédé comprend :
exécuter, par au moins l'un d'un troisième noeud RAN ou d'un deuxième noeud d'agrégation RAN, la fonction MEC ;
dans lequel le au moins un du troisième noeud RAN ou du deuxième noeud d'agrégation RAN exécutant la fonction MEC comprend :
exécuter, par le au moins un du troisième noeud RAN ou du deuxième noeud d'agrégation RAN, d'au moins une de la collecte des informations, de la mise en cache de service local ou de la dérivation de service local.

3. Procédé de la revendication 2, dans lequel le troisième noeud RAN effectuant la collecte des informations comprend au moins l'une des étapes suivantes :
acquérir des informations sur un deuxième UE, par un rapport provenant du deuxième UE par une interface aérienne ;
acquérir des informations sur une deuxième cellule par une troisième station de base ; ou
acquérir des informations sur un support lié à un troisième UE par une interface S1.

4. Procédé de la revendication 2, dans lequel le deuxième noeud d'agrégation RAN effectuant la collecte des informations comprend au moins l'une des étapes suivantes :
acquérir, à partir d'une quatrième station de base, par une interface S1, des informations sur un quatrième UE, dans laquelle la quatrième station de base acquiert des informations sur le quatrième UE par un rapport provenant du quatrième UE via une interface aérienne ;
acquérir, par une interface S1, d'au moins une information sur une troisième cellule ou une information sur une cinquième station de base administrée par le deuxième noeud d'agrégation RAN ; ou
acquérir des informations sur un support lié à un cinquième UE via une interface S1.

5. Système pour mettre en oeuvre un service d'informatique de pointe mobile, MEC, (Mobile-Edge Computing), **caractérisé en ce que** le système comprend un noeud de réseau central et un serveur MEC ;
dans lequel une entité fonctionnelle MEC du serveur MEC est déployée sur le noeud de réseau central ;
l'entité fonctionnelle MEC est configurée pour effectuer une collecte des informations, dans laquelle l'entité fonctionnelle MEC est configurée pour effectuer au moins une des étapes suivantes pour effectuer la collecte des informations :
acquérir, à partir d'un registre de localisation de domicile, HLR, (Home Location Register) ou d'un serveur d'abonnés de domicile, HSS, (Home Subscriber Server) des informations sur l'abonnement liées à un premier équipement utilisateur, UE, (User Equipment) et les informations sur l'abonnement liées au premier UE comprenant une capacité du premier UE et/ou un type du premier UE ; ou
acquérir, par l'intermédiaire d'une interface entre le noeud de réseau central et un premier noeud de réseau d'accès radio, RAN, (Radio Access Network) au moins l'une des informations sur une première station de base ou des informations sur une première cellule, les informations sur la première station de base comprenant une capacité de la première station de base, et les informations sur la première cellule comprenant une capacité de la première cellule administrée par une deuxième station de base, des informations sur une charge de la première cellule, et/ou des informations sur une largeur de bande de la première cellule ; et
l'entité fonctionnelle MEC est configurée pour effectuer une mise en cache de service local qui comprend la réaffectation de la qualité de service, QoS, (Quality of Service) et/ou une priorité d'un service mis en cache par le serveur MEC déployé sur le noeud de réseau central selon les informations collectées.

6. Système de la revendication 5, dans lequel le système comprend un troisième noeud RAN, et un deuxième noeud d'agrégation RAN ; et
l'entité fonctionnelle MEC du serveur MEC est déployée sur au moins un du troisième noeud RAN ou du deuxième noeud d'agrégation RAN.

7. Système de la revendication 6, dans lequel
en réponse au déploiement de l'entité fonctionnelle MEC sur le troisième noeud RAN, la transmission de données entre l'entité fonctionnelle MEC et le troisième noeud RAN est mise en oeuvre par une interface interne ;
en réponse à l'entité fonctionnelle MEC étant déployée sur le deuxième noeud d'agrégation RAN, la transmission de données entre l'entité fonctionnelle MEC et le deuxième noeud RAN est mise en oeuvre par une interface S1 ; et
en réponse au déploiement de l'entité fonctionnelle MEC sur le noeud de réseau central, la transmission de données entre l'entité fonctionnelle MEC et le noeud RAN est mise en oeuvre par une interface S1-U.

8. Système de la revendication 6, dans lequel, en réponse à l'entité fonctionnelle MEC étant déployée sur le troisième noeud RAN, l'entité fonctionnelle MEC est configurée pour collecter des informations par au moins l'une des étapes suivantes :
acquérir des informations sur un deuxième UE, par un rapport provenant du deuxième UE par une interface aérienne ;
acquérir des informations sur une deuxième cellule par une troisième station de base ; ou
acquérir des informations sur un support lié à un troisième UE par une interface S1.

9. Système de la revendication 6, dans lequel, en réponse à l'entité fonctionnelle MEC étant déployée sur le deuxième noeud d'agrégation RAN, l'entité fonctionnelle MEC est configurée pour collecter des informations par au moins l'une des étapes suivantes :
acquérir, à partir d'une quatrième station de base, par une interface S1, des informations sur un quatrième UE, dans laquelle la quatrième station de base acquiert des informations sur le quatrième UE par un rapport provenant du quatrième UE par une interface aérienne ;
acquérir, par une interface S1, d'au moins une information sur une troisième cellule ou une information sur une cinquième station de base administrée par le deuxième noeud d'agrégation RAN ; ou
acquérir des informations sur un support lié à un cinquième UE par une interface S1.

10. Système de la revendication 6, dans lequel le troisième noeud RAN, le deuxième noeud d'agrégation RAN, ou le noeud de réseau central comprend un module de collecte des informations MEC et un module de mise en oeuvre de services MEC,
dans lequel le module de collecte des informations MEC est configuré pour :
collecter des informations sur un service MEC ; et
dans lequel le module de mise en oeuvre de service MEC est configuré pour : mettre en oeuvre le service MEC selon les informations sur le service MEC.

11. Support de stockage lisible par ordinateur dans lequel sont stockées des instructions exécutables par ordinateur, **caractérisé en ce que** les instructions, lorsqu'elles sont exécutées par un processeur, amènent le processeur à exécuter le procédé de mise en oeuvre d'un service MEC (Mobile-Edge Computing) selon l'une quelconque des revendications 1 à 4.
